# FASCICULE DE BREVET EUROPEEN

(11) **EP 2 150 499 B1**
(45) Date de publication et mention de la délivrance du brevet: **13.04.2011**
(21) Numéro de dépôt: 08760607.5
(22) Date de dépôt: 05.06.2008
(51) Int. Cl.: C02F 1/461, C25B 11/12, C02F 1/467

(54) **PROCEDE D'ACTIVATION D'UNE ELECTRODE A BASE DE DIAMANT**
VERFAHREN ZUR AKTIVIERUNG EINER AUF DIAMANT BASIERENDEN ELEKTRODE
PROCESS FOR ACTIVATING A DIAMOND-BASED ELECTRODE

(30) Priorité: 05.06.2007 FR 0755485
(43) Date de publication de la demande: 10.02.2010
(73) Titulaire: Commissariat à l'Énergie Atomique et aux Énergies Alternatives, 75015 Paris (FR)
(72) Inventeur: DE SANOIT, Jacques, F-94150 Rungis (FR); VANHOVE, Emilie, F-91190 Gif Sur Yvette (FR)
(74) Mandataire: Ilgart, Jean-Christophe
(86) Numéro de dépôt international: PCT/EP2008/057032
(87) Numéro de publication internationale: WO 2008/148861

(56) Documents cités:
- WO-A-01/25508
- US-A1- 2006 175 953
- MAHE E ET AL: "Electrochemical reactivity at graphitic micro-domains on polycrystalline boron doped diamond thin-films electrodes" ELECTROCHIMICA ACTA, ELSEVIER SCIENCE PUBLISHERS, BARKING, GB, vol. 50, no. 11, 1 avril 2005 (2005-04-01), pages 2263-2277, XP004779490 ISSN: 0013-4686
- BECK F ET AL: "Boron doped diamond/titanium composite electrodes for electrochemical gas generation from aqueous electrolytes" ELECTROCHIMICA ACTA, ELSEVIER SCIENCE PUBLISHERS, BARKING, GB, vol. 44, no. 2-3, 15 septembre 1998 (1998-09-15), pages 525-532, XP004137778 ISSN: 0013-4686
- RAO T N ET AL: "Recent advances in electrochemistry of diamond" DIAMOND AND RELATED MATERIALS, ELSEVIER SCIENCE PUBLISHERS, AMSTERDAM, NL, vol. 9, no. 3-6, avril 2000 (2000-04), pages 384-389, XP004199782 ISSN: 0925-9635

## Description

### DOMAINE TECHNIQUE

La présente invention appartient au domaine des électrodes à base de diamant, leur préparation et leur activation.

Plus particulièrement, la présente invention concerne un procédé de traitement d'une électrode à base de diamant capable de produire, par activation électrochimique, des électrodes présentant une réactivité électrochimique importante et stable en fonction du temps.

### ÉTAT DE LA TECHNIQUE ANTÉRIEURE

Le diamant, cristal constitué d'arrangements tétraédriques d'atomes de carbone de type sp3, présente de remarquables propriétés. Les attributs de ce matériau, comme, par exemple, son extrême dureté, sa résistance à la corrosion, son caractère de semi-conduction à large bande interdite, sa bio-inertie et sa conductivité thermique, lui ont valu un intérêt croissant dans des domaines aussi variés que l'optique, l'électronique, la santé, l'énergie ou encore la mécanique. La rareté et par conséquent le coût prohibitif du diamant naturel ont cependant longtemps inhibé l'expansion de ses applications en dépit de ses atouts prometteurs. Le développement de procédés innovants de synthèse à haute pression et haute température puis plus récemment à basse pression et basse température tels que le dépôt chimique en phase vapeur ont permis, il y a une quinzaine d'années, son essor.

Des techniques efficaces ont été développées pour la croissance économe de films de diamant polycristallin sur des substrats moins onéreux que le diamant. De surcroit, ces méthodes autorisent l'incorporation d'atomes ou de molécules tels que le bore dans le diamant. Dans ce dernier cas, un semi-conducteur de type p est créé. En particullier, un nouveau type de matériau pour l'élaboration d'électrodes peut ainsi être obtenu nommé B-NCD (pour « Boron-doped nanocrystalline Diamond »), combinant les propriétés uniques du diamant à des propriétés électrochimiques exceptionnelles [Hupert et *al*., 2003].

Les électrodes à base de diamant dopé au bore présentent des propriétés électrochimiques intéressantes qui incluent une large fenêtre de potentiel, une stabilité en milieu aqueux et organique, de faibles courants résiduels et une résistance élevée à la corrosion chimique et électrochimique [Hupert et *al*., 2003]. Ces caractéristiques font du diamant un matériau de choix pour un éventail étendu d'applications électrochimiques. Les films de diamant polycristallins peuvent être dopés à des taux induisant un comportement allant de la semi-conduction (10¹⁸ < [B] < 10²⁰.cm⁻³) à un comportement quasi-métallique, ([B] > 3.10²⁰ .cm⁻³).

Alors que les électrodes semi-conductrices sont particulièrement adaptées à des fins de détection ou d'analyse, les applications telles que la synthèse électrochimique, le traitement des eaux usées par électrolyse ou encore les capteurs bioélectroniques requièrent des électrodes très conductrices voire au comportement métallique. De récentes études ont été menées sur les facteurs qui influencent la réactivité électrochimique. Au nombre de ces facteurs figurent en bonne place la surface développée réelle et donc la rugosité du film cristallin, le taux de dopage en bore, les phases de carbone non cristallines et la terminaison de la surface du film [Hupert et *al*., 2003] ; [Yagi et *al*., 1999].

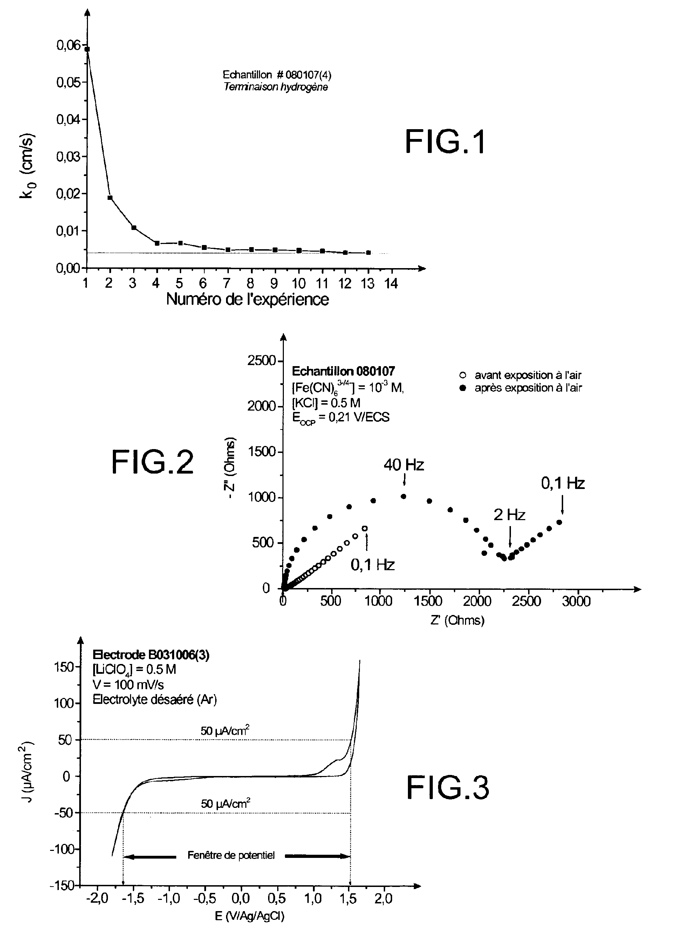

Concernant le paramètre relatif à la terminaison de la surface du film, de nombreux travaux ont mis en évidence la sensibilité de la réponse électrochimique des électrodes vis-à-vis de la composition chimique de la surface du diamant. Les films hydrogénés exhibent ainsi un caractère hydrophobe, une affinité électronique négative associée à une réactivité élevée [Yagi et *al*., 1999] ; [Girard et al., 2007] ; [Tryk et *al*., 2001]. L'élaboration du diamant nanocristallin dopé au bore (B-NCD) s'effectuant en milieu hydrogéné (sous plasma d'hydrogène), la surface du matériau sortant du réacteur de synthèse possède une terminaison hydrogène engendrant une réactivité électrochimique élevée [Tryk et *al*., 2001]. Malheureusement, une exposition à l'air pendant plusieurs jours ou une simple utilisation comme électrode de travail induit une chute importante de cette réactivité. Cette dernière tend cependant à se stabiliser mais vers des valeurs insuffisantes pour les applications électrochimiques pointues. Afin d'illustrer ce phénomène, est montrée figure 1 la chute, en fonction de la succession chronologique des expériences, de la valeur de la constante de vitesse de transfert électronique (k₀) mesurée sur une électrode B-NCD venant tout juste d'être synthétisée.

Ces expériences ont été menées par spectroscopie d'impédance électrochimique (EIS) à l'aide d'une solution équimolaire d'un couple redox rapide (Fe(CN)₆^{3-/4-}) et au potentiel d'équilibre (E₀ = + 0,21 V/ECS). Une mesure d'impédance durant environ 5 minutes, on observe que la valeur de k₀ passe de 5, 9 10⁻² à 4,2 10⁻³ cm/s après seulement une heure sans aucune sollicitation en potentiel.

La figure 2 présente deux spectres EIS enregistrés avec deux électrodes de travail B-NCD du même lot, l'une avant et l'autre après exposition à l'air pendant une durée de 10 jours. Des données des spectres d'impédance sont déduites des valeurs de k₀ = 5,8 10⁻² cm/s (avant exposition à l'air) et k₀ = 2,0 10⁻⁴ cm/s (après exposition à l'air). Ce phénomène parfaitement reproductible, observé également avec d'autres échantillons permet de conclure que la réactivité des électrodes B-NCD initialement hydrogénées se dégrade fortement suite à une simple exposition à l'air pendant quelques jours.

Cette décroissance de la réactivité électrochimique est rarement évoquée par les auteurs dans les publications, mais elle transparait cependant au travers de l'évocation de la détection d'oxygène à la surface des films initialement hydrogénés puis exposés à l'air. La nécessité pour certains auteurs de réactiver périodiquement leurs électrodes par un traitement plasma hydrogène révèle également ce problème. A l'inverse, les surfaces oxydées sont stables, hydrophiles, possèdent une affinité électronique positive mais aussi une réactivité moindre [Yagi et *al*., 1999] ; [Girard et al., 2007] ; [Tryk et *al.,* 2001].

Différents traitements de surface visant à modifier la terminaison de surface du B-NCD et ainsi à optimiser les propriétés électrochimiques de celui-ci ont déjà été proposés pour répondre à un tel problème technique. En effet, parmi les traitements de surface qui abondent dans la littérature spécialisée, sont recensés les traitements thermiques [Ferro et *al*., 2002], les traitements par plasma [Goeting et *al*. et 2000], les traitements photochimiques, les traitements par oxygène singulet, par l'ozone, par oxydation chimique (KNO₃/H₂SO₄ à chaud) et enfin les traitements électrochimiques. Ces derniers consistent le plus souvent à imposer un potentiel fixe pendant une durée déterminée par polarisation anodique en milieu HClO₄ [Ferro et *al*., 2002], en milieu HNO₃ ou en milieu H₂SO₄ [Girard et al., 2007], par polarisation cathodique ou bien à appliquer une variation cyclique de potentiel dans le domaine anodique ou cathodique en partant d'un potentiel d'équilibre (cyclage entre 0 et + 2,5 V/ECS dans une solution tampon phosphate à pH 2 [Goeting et *al*., 2000]. Le gain en stabilité des performances des diamants oxygénés ne parvient cependant pas à faire oublier leur réactivité électrochimique modeste. Mahé et al. [Mahé et al., 2005] décrivent un procédé d'activation d'une électrode à base de diamant comprenant une étape de polarisation anodique et cathodique d'amplitude constante ("chronoamperometric pulse cleaning").

Becker et Jüttner [Becker et Jüttner, 2003 et 2007] ont utilisé un prétraitement de leurs électrodes B-NCD en effectuant 100 cycles REDOX dans une solution de Na₂SO₄ dans la zone de décomposition du solvant aqueux. Toutefois, Becker et Jüttner ne décrivent pas en détail le protocole utilisé : ils ne donnent aucune indication sur la fenêtre de potentiel, la densité de courant, ni la vitesse de balayage utilisées. Il n'est pas possible pour un homme du métier de reproduire le prétraitement, ni d'évaluer l'apport souhaité ou obtenu de ce prétraitement, puisque les caractéristiques électro-chimiques de l'échantillon ne sont pas mesurées avant ce prétraitement. Cette publication n'est donc pas concluante.

Malgré la profusion des études, les mécanismes qui lient les traitements électrochimiques, l'état de surface et les propriétés électrochimiques restent mal connus. Les études réalisées concluent à des résultats qui dépendent du mécanisme réactionnel pour un couple redox particulier et qui s'avèrent souvent contradictoires. Ainsi pour illustration, Ferro et ses collaborateurs qui ont étudié l'effet de la nature des terminaisons de surface sur le transfert de charge des électrodes à base de diamant dopé au bore, n'ont pas observé de variation significative des valeurs de ΔEₚ des courbes de voltamétrie cyclique avec des électrodes oxydées en utilisant le couple redox Ce^{4+/3+} [Ferro et *al.,* 2002]. Ces auteurs confirment un comportement métallique de leurs électrodes fortement dopées. Le travail présenté par Girard et ses collaborateurs dans des conditions très proches, établit un comportement différent et un déclin notable de la cinétique du transfert de charge après un traitement anodique modéré (100 pA cm⁻² pendant 10 s) [Girard et al., 2007].

Dans la littérature, l'effet de l'oxydation de la surface sur le transfert de charge entre la surface de l'électrode et le couple redox rapide Fe (CN)₆^{3-/4-} est également très controversé. Pour Yagi et Girard [Yagi et *al*., 1999] ; [Girard et al., 2007], le système est plus irréversible après un traitement électrochimique modéré ou un plasma d'oxygène. Granger et ses collaborateurs [Granger et *al*., 1999] ont expliqué que la réaction semblait s'opérer via un site de surface spécifique inhibé par l'oxygène. D'autres auteurs au contraire ont mis en évidence une amélioration de la cinétique du transfert de charge par l'anodisation des électrodes [Goeting et *al*., 2000].

Il existe donc un réel besoin d'obtenir des électrodes à base de diamant boré et, de façon plus générale, des électrodes à base de diamant, dopé ou non, présentant des propriétés améliorées en terme de cinétique du transfert de charge, de stabilité et/ou de reproductibilité des propriétés électrochimiques.

### EXPOSÉ DE L'INVENTION

La présente invention permet de résoudre les problèmes techniques listés ci-dessus en proposant un traitement électrochimique particulier, capable de produire des électrodes à base de diamant présentant une réactivité électrochimique importante et stable en fonction du temps.

En effet, les travaux à la base de la présente invention ont porté sur la fenêtre de potentiel qui constitue une caractéristique essentielle d'une électrode à base de diamant. Celle-ci caractérise le domaine de potentiel dans lequel l'électrode sera utilisable sans que soit observée une décomposition électrolytique du solvant aqueux contenant un sel non électro-actif (oxydation de l'eau dans le domaine anodique avec production d'oxygène gazeux et réduction de l'eau dans le domaine cathodique avec production d'hydrogène gazeux). Généralement, dans le cadre des électrodes B-NCD, la largeur de fenêtre de potentiel en milieu aqueux se situe entre 3 et 3,5 V. Cette valeur pouvant varier notamment en fonction du taux de dopage du diamant et de la terminaison de surface, et étant déterminée pour une densité de courant anodique et cathodique de ± 50 µA/cm².

La détermination de la fenêtre de potentiel est donc une étape importante de la caractérisation d'une électrode à base de diamant et notamment d'une électrode B-NCD. Elle s'effectue lors d'un balayage de potentiel dans un électrolyte support avantageusement désaéré contenant un sel de fond non électro-actif présent en macro-concentration (par exemple, pour une électrode B-NCD, du LiClO₄ à une concentration de 0,5 mol/l). La désaération est effectuée par barbotage d'argon au sein de l'électrolyte pendant au moins 15 minutes avant usage. L'expérience de détermination de la fenêtre de potentiel débute par l'accroissement progressif des bornes du domaine de potentiel. Dans le cadre d'une électrode B-NCD, cet accroissement est réalisé jusqu'à l'obtention de courants anodique et cathodique de l'ordre de ± 150 µA/cm² et la fenêtre de potentiel de l'électrode sera égale (par convention) au domaine de potentiel correspondant à une densité de courant de ± 50 µA/cm². La figure 3 présente un voltamogramme type utilisé pour la détermination d'une fenêtre de potentiel avec une électrode B-NCD.

Les inventeurs ont observé incidemment que le fait de polariser alternativement et ceci pour des valeurs élevées de potentiel pouvant atteindre ± 1,8 V (Ag/AgCl, [KCl] = 3 M) une électrode B-NCD en milieu aqueux désaéré contenant un sel non-électroactif améliorait considérablement ses propriétés électrochimiques et sa stabilité à long terme. Ce phénomène sera par la suite appelé **ACTIVATION REDOX.**

Bien que dérivant d'une expérience classique de caractérisation, l'activation REDOX est un procédé tout à fait original d'activation des électrodes B-NCD et de toute électrode à base de diamant en général. En effet, la mesure de la fenêtre de potentiel s'effectue toujours après les autres caractérisations (voltamétrie cyclique, EIS...) car cette opération peut se révéler parfois dommageable voire destructrice pour le matériau testé. De plus, des densités de courants très importantes peuvent accidentellement traverser les électrodes testées lors d'accroissement de potentiels faibles (verticalité des courbes [J (µA/cm²) = f (E(V))] aux limites de la fenêtre de potentiel).

De plus, tenter d'activer une électrode à base de diamant par cyclage REDOX est une démarche intellectuelle contre-intuitive. On pourrait en effet présager que les terminaisons de surface engendrées par une activation anodique seraient modifiées, voire détruites lors du balayage dans le domaine cathodique et vice versa. L'expérience a cependant révélé un comportement différent.

Par conséquent, la présente invention concerne un procédé d'activation d'une électrode à base de diamant comprenant une étape consistant à soumettre, en présence d'une solution aqueuse contenant un électrolyte ionique, ladite électrode à un potentiel alternativement de polarisation cathodique et anodique, d'amplitude croissante jusqu'à obtenir une densité de courant anodique et cathodique comprise entre 10 µA/cm² et 1 mA/cm².

Par « activation d'une électrode », on entend, dans le cadre de la présente invention, l'action de soumettre ladite électrode à un traitement, en l'occurrence électrochimique, capable d'améliorer les propriétés de l'électrode en terme de réactivité électrochimique.

Le procédé de la présente invention est remarquable de par le fait qu'il s'applique à tout type d'électrodes à base de diamant que le diamant soit dopé ou non et, dans le cadre des électrodes à base de diamant dopé, à tout type de dopant.

Ainsi, par « électrode à base de diamant », on entend dans le cadre de la présente invention toute électrode dont le ou un des constituants est du diamant. Dans le cadre de la présente invention, une électrode à base de diamant peut aussi bien être une électrode uniquement constituée de diamant qu'une électrode dans laquelle le diamant ne constitue qu'une partie de cette dernière. Dans ce cas, le diamant peut se présenter sous forme d'une couche mince, continue ou discontinue, comme un film en surface d'un substrat tel qu'un substrat contenant du Fe, Ti, Zr, Nb, Ni, Ta, Mo, W, B, Si, du graphite et/ou du diamant. En conséquence de quoi, le diamant de l'électrode mise en oeuvre dans la présente invention peut se présenter sous forme de diamant mono-, macro-, micro- nano-cristallin ou ultra -nanocristallin (UNCD).

Dans une première variante de la présente invention, le diamant de l'électrode mise en oeuvre est exclusivement du diamant non dopé.

Dans une seconde variante, l'électrode à base de diamant comprend du diamant dopé. Le diamant dopé peut se situer à la surface de l'électrode. Avantageusement, la totalité du diamant de l'électrode est du diamant dopé. Tout agent dopant et, notammement, tout élément dopant bivalent, trivalent ou pentavalent peuvent être utilisés dans le cadre de la présente invention. De façon plus particulière, l'agent dopant est choisi dans le groupe constitué par le bore, l'azote, le phosphore, le nickel, le soufre et les mélanges de ceux-ci.

L'homme du métier connaît différentes techniques capables de préparer des électrodes à base de diamant, dopé ou non, telles que précédemment envisagées. A titre d'exemples et de façon non limitative, la technique utilisée peut être un dépôt chimique de diamant en phase gazeuse par filament chaud ou assisté par plasma micro-ondes.

Dans le cadre des électrodes à base de diamant dopé, l'homme du métier saura, sans effort inventif, quelle quantité d'agent dopant ou de mélange d'agents dopants utiliser en fonction du comportement recherché pour le diamant dopé (semi-conducteur ou quasi-métallique) et/ou en fonction de l'utilisation ultérieure de l'électrode. A titre d'exemple, une électrode à base de diamant boré susceptible d'être mise en oeuvre dans le cadre de la présente invention peut contenir plus de 10¹⁸ atomes de bore par cm³ et notamment plus de 10²⁰ atomes de bore par cm³.

Tout électrolyte ionique connu par l'homme du métier est utilisable dans le cadre de la présente invention. Avantageusement, l'électrolyte ionique mis en oeuvre est un électrolyte ionique non-électroactif. Par « électrolyte ionique non-électroactif », on entend dans le cadre de la présente invention un électrolyte ionique contenant un sel non électroactif en macroconcentration, qui, aux potentiels mis en oeuvre dans le procédé de l'invention, assure la conduction des charges électriques mais n'est pas susceptible de participer à une réaction d'oxydo-réduction autre que la décomposition électrochimique de l'eau. Plus particulièrement, l'électrolyte ionique non-électroactif est une solution aqueuse d'un sel non-électroactif. Ledit sel non-électroactif peut notamment être choisi dans le groupe constitué par du LiClO₄, NaClO₄, KClO₄, Na₂SO₄, K₂SO₄, Li₂SO₄. L'électrolyte ionique avantageusement non-électroactif ou le sel ionique non-électroactif peut être présent dans la solution aqueuse en une quantité allant de 0,01 à la limite de solubilité dudit électrolyte ou dudit sel. A titre d'exemple, on peut utiliser une solution aqueuse de LiClO₄ à une concentration de 0,5 à 1 M et ce notamment dans le cadre d'électrode à base de diamant boré.

De façon préférée, la solution aqueuse contenant un électrolyte ionique avantageusement non-électroactif est désaérée et ce avant la mise en oeuvre du procédé de l'invention. En effet, la désaération préalable de la solution aqueuse permet d'éviter, au cours du procédé d'activation, la réduction de l'oxygène dissous dans l'eau lors du balayage dans le domaine cathodique. Toute technique connue de l'homme du métier et permettant de désaérer une solution aqueuse est utilisable dans le cadre de la présente invention. A titre d'exemple, cette technique peut consister à un barbotage d'argon, au sein de la solution aqueuse, durant plusieurs minutes et notamment durant 15 minutes.

Le procédé d'activation REDOX selon la présente invention consiste à accroître progressivement, à partir du potentiel d'équilibre, le domaine de potentiel jusqu'à obtenir une densité de courant anodique et cathodique modérée, légèrement supérieure à la densité de courant anodique ou cathodique à laquelle la solution aqueuse commence à se décomposer en oxygène ou en hydrogène. La densité de courant au début de laquelle la solution aqueuse commence à se décomposer est une valeur que l'homme du métier pourra facilement apprécier (typiquement J = 10 µA/cm²).

Le fait d'imposer, durant le procédé d'activation de l'invention, une faible densité de courant limite la production de gaz, au niveau de l'électrode à base de diamant, par oxydation et réduction de l'eau, phénomène qui pourrait conduire à une hétérogénéité des modifications de la terminaison de surface. En effet, l'accrochage de bulles de gaz sur le diamant dopé ou non de l'électrode modifierait sa surface par effet d'écran. La diminution de la surface aurait pour conséquence directe d'augmenter artificiellement la densité de courant sur la zone non occultée et de créer des zones mortes à l'endroit de fixation des bulles de gaz où l'activation électrochimique serait bloquée jusqu'à leur élimination naturelle durant le traitement.

Le fait d'imposer à l'électrode à base de diamant, durant le procédé d'activation, une densité de courant modérée à faible est un élément essentiel de la présente invention. Ainsi, tout procédé permettant d'obtenir de telles densités de courant en évitant absolument toute densité de courant qui, par sa valeur abssolue trop importante, risquerait d'endommager l'électrode doit être considéré comme utilisable dans le cadre de la présente invention.

De façon préférée, le procédé de l'invention consiste à accroître progressivement, à partir du potentiel d'équilibre, le domaine de potentiel jusqu'à obtenir une densité de courant anodique et cathodique inférieure à +/- 1 mA/cm², comprise entre +/- (10 et 1000) µA/cm² notamment comprise entre +/- (10 et 900) µA/cm², en particulier comprises entre +/- (10 et 800) µA/cm² et, plus particulièrement, +/- (10 et 700) µA/cm². A titre d'exemple et dans le cadre d'une électrode à base de diamant boré, le potentiel auquel l'électrode est soumise est ajusté jusqu'à obtenir une densité de courant anodique et cathodique égales et comprises entre 10 et 500 µA/cm². Des valeurs particulièrement préférées de densité de courant sont avantageusement comprises entre 300 et 500 µA/cm² (par exemple, la valeur 400 µA/cm²) ou comprises entre 100 et 200 µA/cm² (par exemple, la valeur 150 µA/cm²).

Le potentiel à appliquer à l'électrode à base de diamant pour obtenir de telles valeurs de densité de courant peut varier de plusieurs dizaines de mV selon la nature de l'électrode à activer et selon la nature de l'électrolyte ionique non-électroactif mis en oeuvre et sa concentration. L'homme du métier saura, à partir d'une étude de la fenêtre de potentiel de l'électrode effectuée dans une solution aqueuse contenant le même electrolyte ionique non-électroactif que celui mis en oeuvre dans le cadre du procédé d'activation, déterminer le potentiel à appliquer en fonction de la densité de courant recherchée. A titre d'exemple et dans le cadre d'une électrode à base de diamant boré, le potentiel à appliquer à l'électrode pour obtenir une valeur de densité de courant aux alentours de 400 µA/cm² ou aux alentours de 150 µA/cm² se situent respectivement entre (- 1,85 ± 0,05) V et (+ 1,70 ± 0,05) V et entre (- 1,50 ± 0,5) V et (+ 1,50 ± 0,5) V. Ces valeurs sont exprimées ici par rapport à une électrode de référence qui est une électrode argent/chlorure d'argent ayant, comme électrolyte interne, une solution de chlorure de potassium à la concentration de 3 moles/l (électrode de référence désignée par «Ag/AgCl, [KCl] = 3 M » dans la présente).

Dans une forme de mise en oeuvre préférée du procédé selon l'invention, le premier potentiel auquel l'électrode à base de diamant est soumise est un potentiel de polarisation cathodique. Dans une forme de mise en oeuvre préférée alternative du procédé selon l'invention, le premier potentiel auquel l'électrode à base de diamant est soumise est un potentiel de polarisation anodique. L'amplitude croissante du potentiel auquel l'électrode à base de diamant est soumise dans le cadre du procédé selon l'invention est obtenu au moyen d'incréments de potentiel dont la valeur est avantageusement comprise entre 50 et 150 mV et notamment de l'ordre de 100 mV. A titre d'exemple et dans le cadre d'une électrode à base de diamant boré, une approche expérimentale correcte consiste à augmenter progressivement le domaine de potentiel à partir des valeurs [-1,5 V, + 1,5 V] en utilisant un dispositif à trois électrodes tel que défini ci-après par incrément de 100 mV puis 50 mV jusqu'à obtenir les valeurs de densité de courant (J) désirées, soit + 400 µA/cm² en densité de courant anodique et - 400 µA/cm² en densité de courant cathodique. En variante, l'approche expérimentale correcte consiste à augmenter progressivement le domaine de potentiel à partir des valeurs [-1,1 V, + 1,1 V] en utilisant un dispositif à trois électrodes tel que défini ci-après par incrément de 100 mV puis 50 mV jusqu'à obtenir les valeurs de + 150 µA/cm² en densité de courant anodique et de - 150 µA/cm² en densité de courant cathodique.

Dans le cadre du procédé d'activation selon l'invention, il est important de travailler, en ce qui concerne le potentiel d'amplitude croissante, par approches successives afin de préserver l'électrode d'une éventuelle altération en cas de surtension accidentelle. Sans vouloir être lié par une quelconque théorie, il est possible que l'absence d'une approche au moyen d'incréments explique les résultats non-concluants de l'activation électrochimique mise en oeuvre par Becker et Jüttner [Becker et Jüttner, 2003 et 2007].

Le procédé d'activation d'une électrode à base de diamant selon l'invention peut comprendre une étape ultérieure consistant, lorsque la valeur des densités de courant anodique et cathodique recherchée est obtenue, à soumettre l'électrode à au moins 1, notamment au moins 2 et, en particulier, au moins 3 cycles de potentiel alternativement de polarisation cathodique et anodique d'amplitude constante. Il est clair que le potentiel constant de cette étape est le potentiel ayant permis d'atteindre la valeur des densités de courant anodique et cathodique recherchée. Dans cette étape ultérieure, l'électrode à base de diamant est avantageusement soumise à plus de 5, en particulier à plus de 10 et, tout particulièrement, à entre 10 et 50 potentiels alternativement de polarisation cathodique et anodique d'amplitude constante. Il n'y a, a priori, aucun intérêt à prolonger cette étape ultérieure du traitement au delà de 50 cycles.

Dans une forme de mise en oeuvre préférée du procédé selon l'invention, le dernier potentiel auquel l'électrode à base de diamant est soumise est un potentiel de polarisation anodique qui s'achève au potentiel d'équilibre (OCP).

Selon la présente invention, l'alternance entre polarisation cathodique et anodique pour chaque potentiel est réalisée à une vitesse comprise entre 50 et 150 mV/s et avantageusement égale à 100 mV/s. Cette valeur de vitesse de balayage s'applique aussi bien à l'étape durant laquelle l'électrode à base de diamant est soumise à un potentiel d'amplitude croissante qu'à l'étape ultérieure durant laquelle le potentiel est d'amplitude constante.

En variante de la procédure continue définie ci-dessus, on peut envisager une procédure discrète permettant une alternance entre polarisation cathodique et anodique sans balayage et ce aussi bien à l'étape durant laquelle l'électrode à base de diamant est soumise à un potentiel d'amplitude croissante qu'à l'étape ultérieure durant laquelle le potentiel est d'amplitude constante.

Dans une autre variante, procédure continue et procédure discrète peuvent être mises en oeuvre au cours d'un même procédé d'activation.

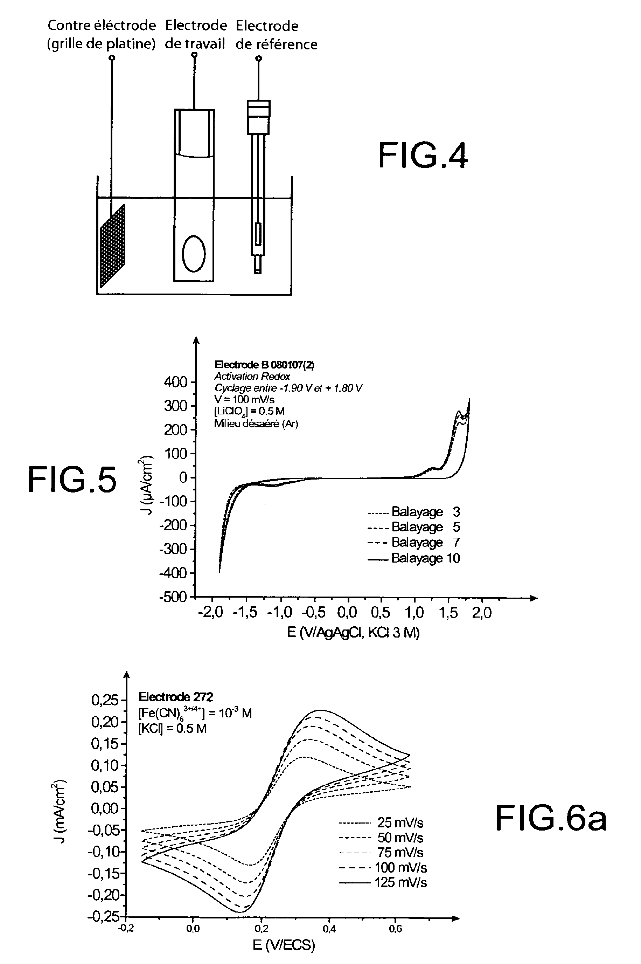

Le dispositif pour mettre en oeuvre le procédé selon la présente invention est un montage dit à trois électrodes. En effet, les expériences d'activation REDOX sont menées dans une cellule électrochimique équipée d'une électrode de référence, d'une électrode de travail et d'une contre électrode. Toute électrode de référence peut être utilisée. L'homme du métier connaît les électrodes de référence qu'il convient d'utiliser sans avoir à faire preuve d'effort inventif. L'électrode de référence est soit de type ECS (électrode au calomel saturé), soit une électrode de référence Ag/AgCl, [KCl] = 3 M, soit éventuellement un simple fil de platine. L'électrode de travail est l'électrode de diamant préférentiellement dopée et la contre-électrode une grille de platine possédant une surface au moins cinq fois supérieure à celle de l'électrode de travail. La figure 5 présente un exemple de montage possible. Une variante de celui-ci peut consister à immobiliser le diamant de façon à ce que celui-ci, constitue le fond de la cellule. Dans ce cas, l'électrode de travail n'est plus du type électrode plongeante. L'électrolyte est une solution aqueuse contenant un électrolyte ionique non-électroactif tel que, pour une électrode B-NCD, du LiClO₄ à la concentration de 0,5 M, sans ajustement préalable de la valeur du pH. Les différentes électrodes sont reliées à un générateur de courant de type potentiostat. Le balayage de potentiel est piloté par un PC équipé d'un logiciel communiquant avec le potentiostat.

L'activation REDOX étant un phénomène réversible, il est possible de réactiver périodiquement par le procédé objet de l'invention une électrode qui aurait, de par une utilisation intensive dans le domaine de la mesure électrochimique (électrode, capteur...), perdu toute ou partie de sa réactivité.

Par conséquent, la présente invention concerne l'utilisation d'un procédé tel que précédemment défini pour restaurer la réactivité électrochimique d'une électrode à base de diamant telle que précédemment définie. Il peut notamment être nécessaire de restaurer la réactivité électrochimique d'une électrode à base de diamant ayant perdu une partie de sa réactivité suite à un entreposage à l'air de longue durée ou suite à une utilisation analytique intensive dans le domaine de l'électrochimie.

Durant la mise en oeuvre du procédé d'activation selon la présente invention, les voltamogrammes peuvent évoluer en intensité et/ou en forme. Ceci peut être lié à une modification de la nature des terminaisons de surface du diamant de l'électrode. La figure 5 présente la superposition de quelques voltamogrammes obtenus pour une même expérience durant l'activation REDOX d'une électrode B-NCD.

Après ledit procédé d'activation REDOX, les électrodes à base de diamant possèdent une excellente réactivité et une bonne stabilité dans le temps. Fait surprenant et caractéristique, un même procédé d'activation REDOX de la présente invention mis en oeuvre sur des électrodes de nature identique permet d'obtenir des électrodes activées présentant des propriétés en terme de réactivité électrochimique identiques, alors que des électrodes identiques non activées ou activées par certains procédés d'activation de l'art antérieur présentent des propriétés variables. Quelques exemples de performances obtenues pour des électrodes activés par le procédé de l'invention seront donnés ci-après.

Par conséquent, une électrode à base de diamant activée susceptible d'être obtenue par un procédé d'activation tel que précédemment défini présente notamment une amélioration des propriétés électrochimiques telles que la constante de vitesse de transfert électronique k₀ mesurée avec un couple oxydo-réducteur de type rapide, et la séparation des pics anodiques et cathodiques.

L'électrode à base de diamant activée susceptible d'être obtenue par un procédé d'activation tel que précédemment défini peut présenter, comme composante majoritaire des composantes du carbone d'un spectre XPS obtenu en configuation 30° (sensible à la surface), la composante CHₓ avec x égal à 2 ou 3. Par « composantes du carbone », on entend dans le cadre de la présente invention les composantes impliquant au moins un atome de carbone telles que les composantes C-C, CH, CHₓ avec x égal à 2 ou 3, COH, COC, C=O. Par « composante majoritaire », on entend dans le cadre de la présente invention, la composante du carbone la plus abondante par rapport à l'ensemble des composantes du carbone. L'homme du métier sait comment obtenir, à partir d'un spectre XPS obtenu en configuration 30°, les pics de photoémission de chacune des composantes du carbone et notamment celles listées ci-dessus et, pour chaque pic, son aire qui est proportionnelle à l'abondance de l'état de liaison du carbone considéré. Il a été observé que, pour certaines électrodes à base de diamant hydrogénées et activées susceptibles d'être obtenues par un procédé d'activation tel que précédemment défini, le rapport de la composante CHₓ avec x égal à 2 ou 3 sur les composantes totales du carbone est supérieure d'un facteur d'au moins 1,2, notamment d'au moins 1,4, en particulier d'au moins 1,6 et, tout particulièrement, d'au moins 1,8 par rapport au rapport obtenu pour la même électrode non activée.

L'électrode à base de diamant activée susceptible d'être obtenue par un procédé d'activation tel que précédemment défini présente une augmentation d'un facteur d'au moins 1,1, notamment d'au moins 2, avantageusement d'au moins 5, en particulier, d'au moins 10, plus particulièrement, d'au moins 50 et, tout particulièrement, d'au moins 100 de la constante de vitesse de transfert électronique k₀ mesurée à l'aide d'un couple oxydo-réducteur rapide par rapport à la constante de vitesse de transfert électronique k₀ de la même électrode non activée et peut conserver une constante augmentée notamment par rapport aux valeurs observées avant activation pendant plusieurs semaines de conservation à l'air. Selon la présente invention, on entend par « plusieurs semaines », au moins 2 semaines, notamment au moins 4 semaines, en particulier au moins 8 semaines, et, tout particulièrement, au moins 12 semaines. Fait caractéristique et important, cette constante de vitesse de transfert électronique k₀ augmentée, mesurée à l'aide d'un couple oxydo-réducteur rapide après une activation selon le procédé de la présente invention est conservée pendant plusieurs utilisations électrochimiques. Selon la présente invention, on entend par « plusieurs utilisations électrochimiques », au moins 4 cycles de voltamétrie, notamment au moins 10 cycles, en particulier au moins 25 cycles, plus particulièrement, au moins 50 cycles et, tout particulièrement, au moins 100 cycles.

A titre d'exemples, un premier type d'électrodes dopées au bore, terminées hydrogène et activées par le procédé selon la présente invention présentent une augmentation d'un facteur 100 de leur réactivité (constante k₀) et un second type une augmentation d'un facteur 15-20 de leur réactivité (constante k₀), 70% de cette réactivité étant conservées en 8 heures de mesures successives d'impédance électrochimique ou après 50 cycles de voltamétrie cyclique.

Sur des électrodes dopées au bore oxydées et activées par un procédé selon l'invention, les valeurs de k₀ sont maintenues pendant au moins 8 heures, soit pendant 30 mesures successives d'impédance électrochimique (perte maximale observée inférieure à 3%).

La notion de « couples oxydo-réducteurs rapides » est bien connue de l'homme du métier. Pour rappel, certains couples oxydo-réducteurs, dits « rapides », sont caractérisés par une réaction électrochimique réversible, alors que d'autres couples oxydo-réducteurs sont dits « lents » car caractérisés par une réaction électrochimique irréversible. Dans le cadre des couples oxydo-réducteurs rapides, l'échange d'électrons avec l'électrode de travail est direct sans aucune modification de la sphère de solvatation des espèces, alors que le transfert électronique pour les couples oxydo-réducteurs lents engage la sphère interne de coordination avec une rupture ou la formation de liaisons intramoléculaires. Ce type de réaction est, de plus, souvent compliquée par l'adsorption des réactifs et/ou des produits de la réaction sur la surface de l'électrode. Dans le cadre de la présente invention, les couples oxydo-réducteurs rapides susceptibles d'être mis en oeuvre sont, par exemple, Fe(CN)₆^{3-/4-}, IrCl₆^{2-/3-} ou Ru (NH₃)₆^{2+/3+}.

A titre d'exemples et dans le cadre d'une électrode à base de diamant boré, le procédé d'activation de l'invention permet l'obtention de valeurs de constante de vitesse de transfert électronique (k₀) supérieures à 10⁻³ cm/s, notamment supérieures à 10⁻² cm/s et, en particulier, supérieures à 0,2 cm/s pour des couples oxydo-réducteurs rapides.

De plus, une électrode à base de diamant activée selon la présente invention présente une amélioration de la séparation des pics anodiques et cathodiques sur un voltamogramme (ΔEₚ,) par rapport à la séparation des pics anodiques et cathodiques de la même électrode non activée. A titre d'exemple et dans le cadre d'une électrode à base de diamant boré, la séparation des pics anodiques et cathodiques peut être réduite à 75 mV, notamment à 65 mV et, en particulier, à 61 ± 2 mV i.e. proche de la limite théorique de 58-60 mV obtenue pour un couple oxydo-réducteur échangeant un seul électron.

D'autres caractéristiques et avantages de la présente invention apparaîtront encore à la lecture des exemples ci-après donnés à titre illustratif et non limitatif et faisant référence aux figures 5 à 15 annexées.

### BRÈVE DESCRIPTION DES DESSINS

La Figure 1 présente la variation de la valeur de k₀ (cm/s) durant 13 expériences EIS successives ([Fe(CN)₆^{3-/4-}] = 10⁻³ M, [KCl] = 0,5 M, E₀ = 0,21 V/ECS).
La Figure 2 présente l'évolution des spectres EIS au cours du vieillissement à l'air pendant 10 jours d'une électrode initialement hydrogénée. ([Fe(CN)₆^{3-/4-}] = 10⁻³ M, [KCl] = 0,5 M, E₀= 0,21 V/ECS).
La Figure 3 présente la détermination de la fenêtre de potentiel d'une électrode B-NCD.
La Figure 4 propose un montage expérimental utilisé lors de l'activation REDOX des électrodes B-NCD.
La Figure 5 présente des voltamogrammes d'activation REDOX d'une électrode B-NCD en milieu [LiClO₄] = 0,5 M.
La Figure 6a présente la voltamétrie cyclique de l'électrode # 272 telle que définie ci-après avant son activation REDOX.
La Figure 6b présente la spectroscopie d'impédance électrochimique (EIS) de l'électrode # 272 avant son activation REDOX.
La Figure 7a présente la voltamétrie cyclique de l'électrode # 272 après son activation REDOX.
La Figure 7b présente la spectroscopie d'impédance électrochimique (EIS) de l'électrode # 272 après son activation REDOX.
La Figure 8a présente la voltamétrie cyclique de l'électrode # 080107(3) avant son activation REDOX.
La Figure 8b présente la spectroscopie d'impédance électrochimique (EIS) de l'électrode # 080107(3) avant son activation REDOX.
La Figure 9a présente la voltamétrie cyclique de l'électrode # 080107(3) après son activation REDOX.
La Figure 9b présente la spectroscopie d'impédance électrochimique (EIS) de l'électrode # 080107(3) après son activation REDOX.
Les Figures 10a et 10b présentent le spectre XPS de l'électrode # 080107(3) avant son activation REDOX, en configuration 30° (Figure 10a) et en configuration 0° (Figure 10b).
Les Figures 11a et 11b présentent le spectre XPS de l'électrode # 080107(3) après son activation REDOX, en configuration 30° (Figure 11a) et en configuration 0° (Figure 11b)
La Figure 12 présente la spectroscopie d'impédance électrochimique (EIS) des électrodes ◇B140408(1) telle que sortie du réacteur, □3140408(2) après l'activation REDOX 1 et ◆B140408(7) après l'activation REDOX 2. Ces trois électrodes sont issues d'un même lot d'échantillons de diamant identiques, le lot B140408.
La Figure 13 présente la variation de la valeur de k₀ (cm/s) des électrodes B140408(2) après l'activation REDOX 1 et B140408(7) après l'activation REDOX 2 durant plus de 30 expériences EIS successives se déroulant sur une durée totale de plus de 8h.
La Figure 14 représente la voltamétrie cyclique de l'électrode B180707.
La Figure 15 présente les voltamétries cycliques des électrodes 310807(1), (4) et (9) issues d'un même lot d'échantillons identiques après leur activation REDOX.

### EXPOSÉ DÉTAILLÉ DE MODES DE RÉALISATION PARTICULIERS

### I. Exemples d'activation électrochimique selon l'invention.

### I.1. L'électrode # 272.

L'électrode # 272 est constituée d'un diamant avec faces (111) majoritaires (0,6 cm² de surface) déposé sur du silicium (épaisseur Si = 350 µm) sur lequel on a effectué une reprise de croissance avec du diamant dopé bore (3,75 10⁻² µm d'épaisseur) pour le rendre électro-actif en surface.

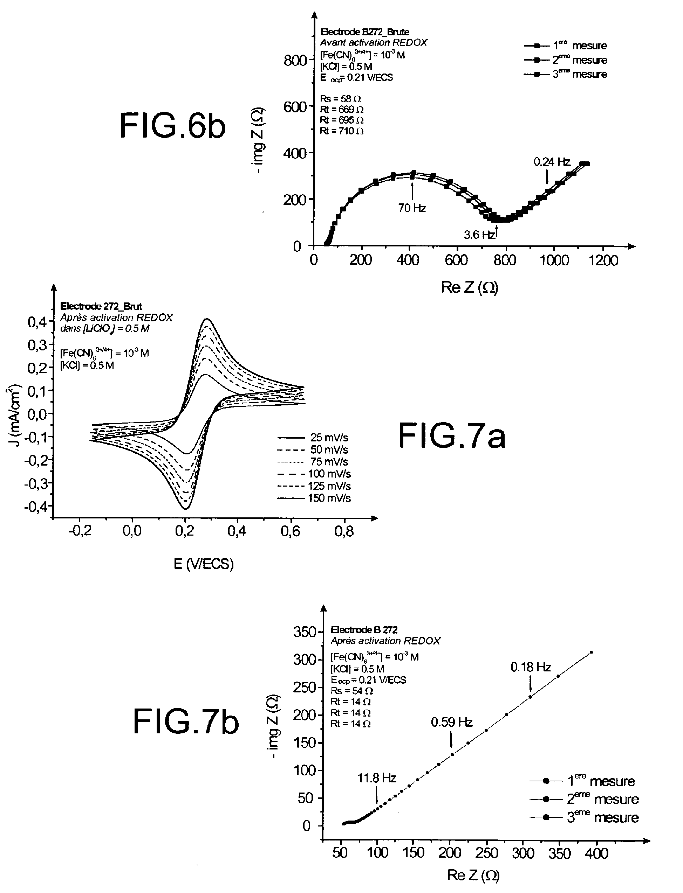

Avant activation REDOX, la réactivité initiale de l'électrode est médiocre. Les courbes de voltamétrie cyclique (corrigées de la chute ohmique) montrent une séparation des pics anodiques et cathodiques (ΔEₚ) élevée. A titre d'exemple, avec une vitesse de balayage de 50 mV/s, nous obtenons ΔEₚ = 180 mV (avec une électrode idéalement réactive, nous obtiendrions pour de mêmes conditions expérimentales un ΔEₚ ~ 60 mV). Cette valeur de ΔEₚ s'accroit avec la vitesse de balayage (figure 6a) ce qui est un argument de plus pour évoquer ce manque de réactivité. La spectroscopie d'impédance (figure 6b) montre une forte valeur de la résistance de transfert électronique (Rₜ ~ 700 Ω) conduisant à une faible valeur de la constante de vitesse de transfert électronique (k₀) - 6,5 10⁻⁴ cm/s. Après activation REDOX (potentiel augmenté de façon croissante puis 10 cycles entre - 1,7 et + 1,7 V/ (Ag/AgCl, [KC1] = 3 M)), les caractéristiques électrochimiques de l'électrode ont été considérablement améliorées. Les courbes de voltamétrie cyclique (figure 7a) montrent une séparation des pics anodiques et cathodiques (ΔEₚ) égale à 68 mV. Contrairement à ce qui avait été observé avant l'activation REDOX, cette valeur ne dépend plus de la vitesse de balayage. La spectroscopie d'impédance (figure 7b) montre une faible valeur de la résistance de transfert électronique (Rₜ ~ 14 Ω) conduisant à une forte valeur de la constante de vitesse de transfert électronique (k₀) - 3,2 10⁻² cm/s. ***La réactivité de l'électrode a été multipliée par un facteur 50 et est stable dans le temps.***

### I.2. L'électrode # 080107(3).

L'électrode # 080107(3) est constituée d'un film de diamant dopé bore de surface 0,60 cm² et d'épaisseur 0,530 µm, déposé sur un substrat de silicium dopé. Après croissance, l'échantillon a été refroidi 2 heures sous atmosphère hydrogène. Entre la préparation de l'échantillon et son utilisation, le diamant a été exposé à l'air une dizaine de jours.

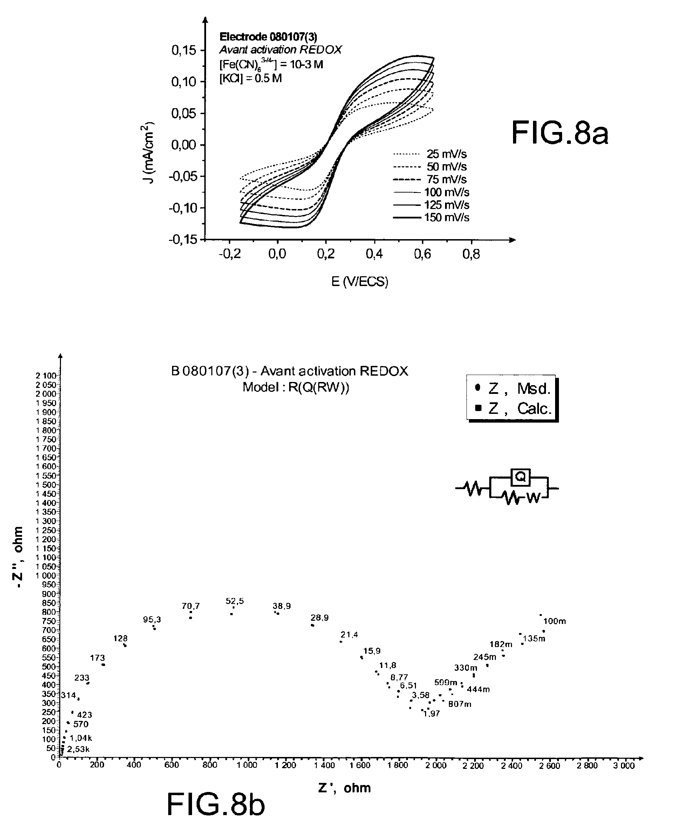

Avant activation REDOX, la réactivité initiale de l'électrode est très médiocre. Les courbes de voltamétrie cyclique (figure 8a) ne permettent pas de distinguer avec précision les pics anodiques et cathodiques qui semblent cependant se déplacer avec la vitesse de balayage. Les densités de courant sont nettement plus faibles que pour d'autres échantillons testés. La spectroscopie d'impédance (figure 8b) montre une très forte valeur de la résistance de transfert électronique (Rₜ ~ 1750 Ω) conduisant à une faible valeur de la constante de vitesse de transfert électronique (k₀) ~ 2,4 10⁻⁴ cm/s.

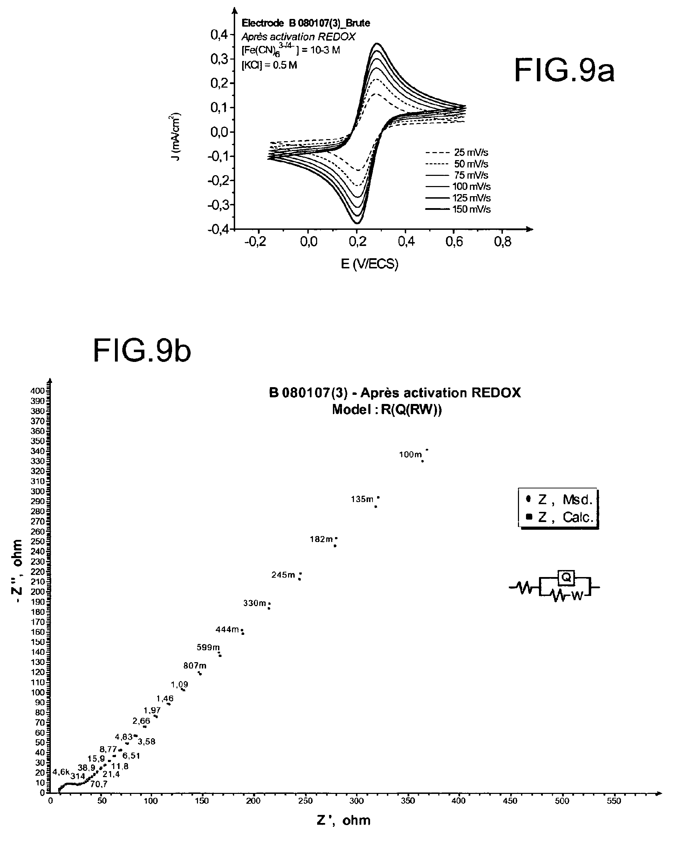

Après 30 cycles d'activation REDOX entre - 1,75 et + 1,70 V (Ag/AgCl, [KCl] = 3 M), les caractéristiques électrochimiques de l'électrode ont été considérablement améliorées. Les courbes de voltamétrie cyclique (figure 9a) montrent des densités de courants anodiques et cathodiques accrues et une séparation des pics anodiques et cathodiques (ΔEₚ) égale à 71 mV. Contrairement à ce qui avait été observé avant l'activation REDOX, cette valeur ne dépend plus de la vitesse de balayage. La spectroscopie d'impédance (figure 9b) montre une faible valeur de la résistance de transfert électronique (Rₜ ~ 18 Ω) conduisant à une forte valeur de la constante de vitesse de transfert électronique (k₀) ~ 2,4 10⁻² cm/s. ***La réactivité de l'électrode* a *été multipliée par un facteur 100* et est *stable dans le temps.***

### I.3. Récapitulatif des données de l'activation REDOX mise en oeuvre aux points I.1. et I.2.

Le tableau 1 ci-après présente un récapitulatif des données de l'activation REDOX des électrodes # 272 et # 080107(3).

**Tableau 1**

| | **Avant activation REDOX** | | **Après activation REDOX** | |
|---|---|---|---|---|
| | k₀ (cm/s) | ΔEₚ (mV) (50 mV/s ) | k₀ (cm/s) | ΔEₚ (mV) (50 mV/s) |
| **Premier exemple** Electrode # 272 | (6,5 ± 0,5) 10⁻⁴ | 180 | (3,2 ± 0,3) 10⁻² | 68 |
| **Second exemple** Electrode # 080107(3) | (2,4 ± 0,2) 10⁻⁴ | ∼ 400 | (2,4 ± 0,2) 10⁻² | 71 |

### II. Quelques exemples de stabilité après activation REDOX.

Le tableau 2 ci-après présente des exemples de stabilité d'électrodes B-NCD préalablement activées selon le procédé décrit dans l'invention. La stabilité a été déterminée par mesure de la constante de vitesse de transfert électronique k₀ (cm/s) avant et après 50 cycles REDOX dans des électrolytes contenant des couples redox rapides différents.

**Tableau 2**

| **Electrode** | **Couple REDOX** | **ΔEₚ (MV)** | **k₀(cm/s) avant 50 cycles voltamétrie** | **k₀ (cm/s) après 50 cycles voltamétrie** |
|---|---|---|---|---|
| **# 0107-a** | IrCI₆^{2-/3-} | 74 | (3,6 ±0.3)10⁻² | (2,4 ± 0,2) 10⁻² |
| **# 0107-b** | Ru(NH₃)₆^{2+/3+} | 78 | (2,1 ± 0,2) 10⁻² | (2,0 ± 0,2) 10⁻² |
| **# 0107-c** | Fe(CN)₆^{3-/4-} | 68 | (2,5 ± 0,2) 10⁻² | (2,4 ± 0,2) 10⁻² |
| **# 0107-d** | Fe(CNk₆^{3-/4-} | 66 | (7,5 ± 0,7) 10⁻² | (6,7± 0,7) 10⁻² |

### III. Analyse XPS de l'électrode # 080107 avant et après l'activation REDOX selon l'invention.

L'électrode # 080107 a été caractérisée par une Spectroscopie de photoélectrons induits par Rayons X (XPS) avant et après un traitement électrochimique d'activation selon l'invention. Deux configurations ont été utilisées : 0° et 30°. La configuration 0° est dite « standard » alors que la configuration 30° est beaucoup plus sensible à la surface (seules les toutes premières rangées atomiques sont sondées).

### III.1. Analyse XPS avant activation REDOX.

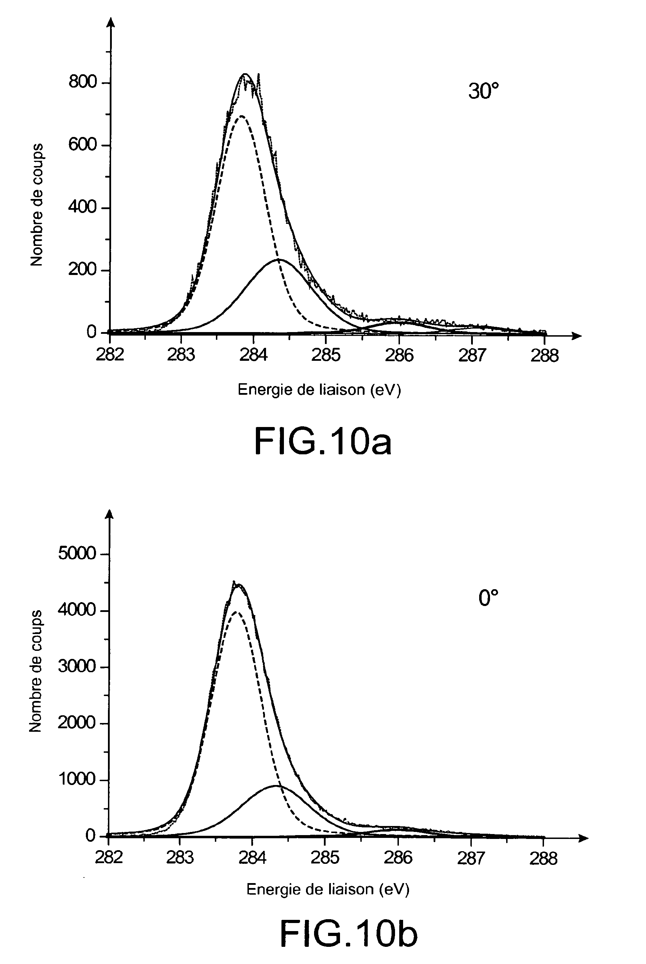

Le spectre XPS obtenu pour l'électrode # 080107 avant son activation REDOX est présenté aux figures 10a et 10b respectivement en configuration 30° et 0°. Les valeurs obtenues pour chaque pic de photoemission caractéristique de ces spectres sont reprises dans le tableau 3 ci-après.

**Tableau 3**

| Niveau de coeur du carbone | | | | | |
|---|---|---|---|---|---|
| **B 080701-4 zone 1** | | | | | |
| Composante | 283.8 eV | 284.3 eV | 285 eV | 286 eV | 287.1 eV |
| attribution | C-C sp3 et CH | CHₓ | C-OH | C-O-C | C=O |
| % aire totale 0° | 73 | **22** | **1** | **3** | **1** |
| Composante | 283.8 eV | 284.3 eV | 285 eV | 286 eV | 287.2 eV |
| totale 30° | 64 | **29** | **1** | **4** | **2** |

Les résultats obtenus sur les différentes zones sont homogènes. La composante CHx est de 22 % de l'aire totale du carbone en géométrie standard (0°) et de 29 % en configuration 30°.

Il faut noter la présence de quelques composantes correspondant à diverses liaisons carbone-oxygène. L'aire représentée par ces composantes est de 8% de l'aire totale du carbone (moyenne sur quatre zones en géométrie standard).

### III.2. Analyse XPS après activation REDOX.

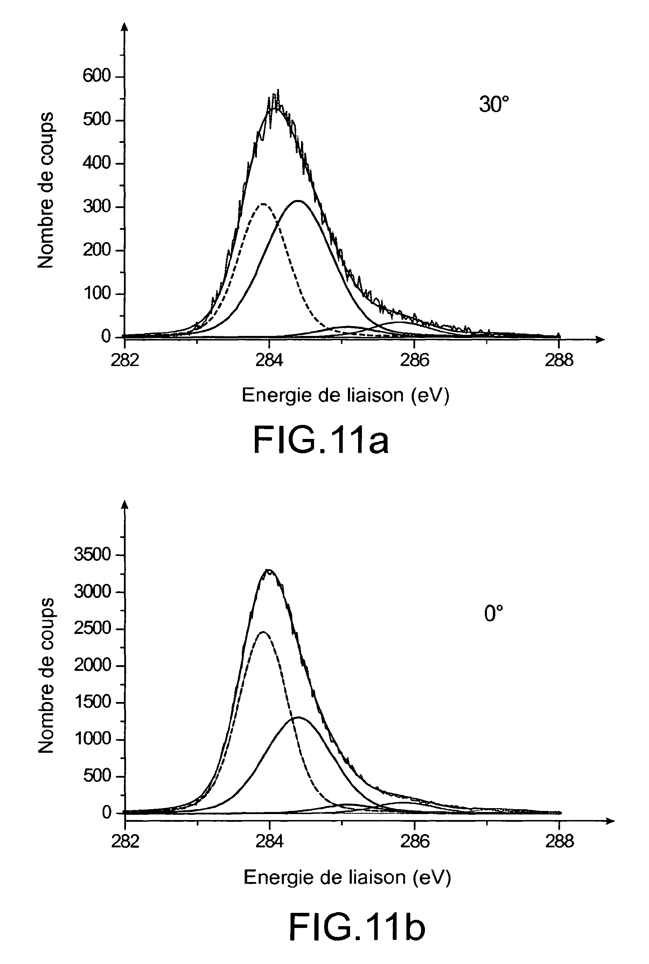

Le spectre XPS obtenu pour l'électrode # 080107 après son activation REDOX est présenté aux figures 11a et 11b respectivement en configuration 30° et 0°. Les valeurs obtenues pour chaque pic de photoemission caractéristique de ces spectres sont reprises dans le tableau 4 ci-après.

**Tableau 4**

| Niveau de coeur du carbone | | | | | |
|---|---|---|---|---|---|
| **B 080701-4 zone 6** | | | | | |
| composante | 283.9 eV | 284.4 eV | 285.1 eV | 285.8 eV | 287.1 eV |
| attribution | C-C sp3 et CH | CHₓ | C-OH | C-O-C | C=O |
| % aire totale 0° | **54** | 38 | 3 | 4 | 1 |
| composante | 283.9 eV | 284.4 eV | 285.1 eV | 285.8 eV | 287.1 eV |
| % aire totale 30° | 38 | 52 | 4 | 5 | 1 |

Le traitement électrochimique objet de l'invention a pour conséquence une exaltation de la composante CHx dans la configuration sensible à la surface, celle-ci est beaucoup plus intense que sur l'échantillon avant traitement. Les résultats sont très homogènes sur les quatre zones observées.

### IV. Electrodes B140408(X).

### IV.1. Leur activation REDOX selon le procédé de l'invention.

Les électrodes B140408(X) sont issues d'un lot d'échantillons de diamants identiques (lot B140408). Ces électrodes sont constituées de diamant fortement dopé déposé sur du silicium.

L'électrode B140408(1) est testée telle que sortie du réacteur, l'électrode B140408(2) l'est après une activation au sein d'une solution aqueuse de perchlorate de sodium et l'électrode B140408(7) après une activation au sein d'une solution aqueuse de perchlorate de lithium.

Cette activation consiste à réaliser vingt cycles redox dans une solution aqueuse contenant un sel non électroactif, le perchlorate de lithium ([LiCl0₄] = 0.5 M ; activation REDOX 2) ou le perchlorate de sodium (NaClO₄] =0,5 M ; activation REDOX 1) entre les frontières de décomposition du solvant, ajustées de façon à ce que les densités de courants anodique et cathodique n'excèdent jamais 150 µA/cm² afin de ne pas dégrader l'électrode et à la vitesse de balayage de 100mV/s.

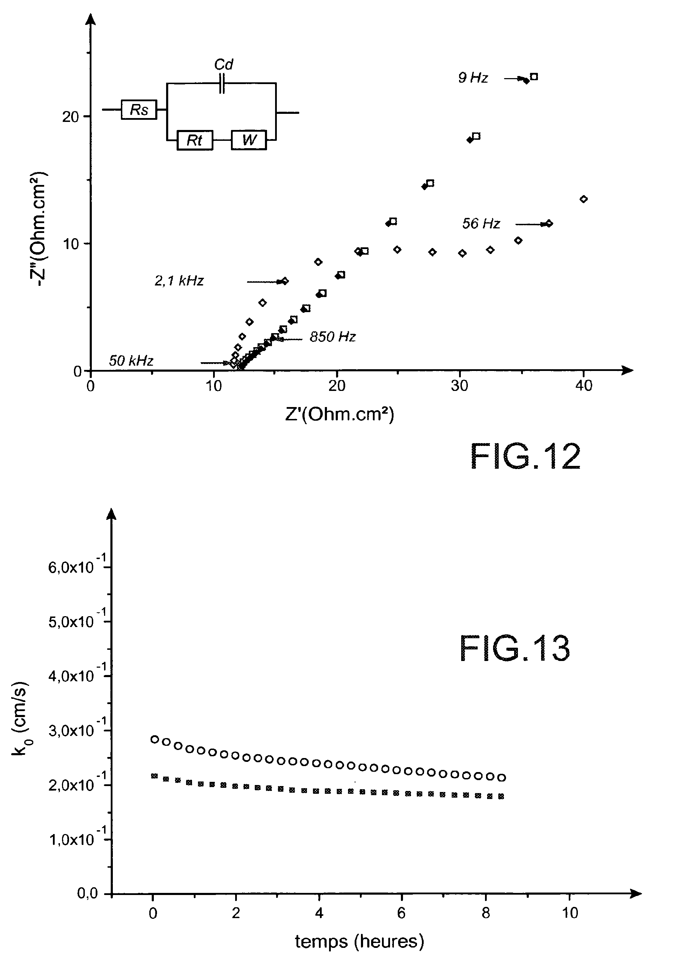

La spectroscopie d'impédance (figure 12) réalisée dans une solution aqueuse de [Fe (CN)₆]^{3-/4-} (10⁻³ M) comprenant un sel de fond en macroconcentration ([KCl] = 0.5 M), montre que la résistance de transfert électronique initiale (Rₜ = 17 Ω/cm²) est très significativement réduite par l'activation REDOX 1 (Rₜ = 1.2 Ω/cm²) et encore d'avantage par l'activation REDOX 2 (Rₜ = 0.94 Ω/cm²) conduisant à une très nette amélioration de la constante de vitesse de transfert électronique initialement de (k₀ = 1.6 10⁻² cm/s) à (k₀ = 0.22 cm/s) à l'issue du traitement 1 et à (k₀ = 0.28 cm/s) à l'issue du traitement 2.

### IV.2. Analyse XPS après activation REDOX.

A l'issue de leur traitement respectif d'activation REDOX, les électrodes B140408(2) et B140408(7) sont testées par spectroscopie d'impédance. Les mesures sont réalisées dans une solution aqueuse de [Fe(CN)₆]^{3-/4-} (10⁻³ M) comprenant un sel de fond en macroconcentration ([KCl] = 0.5 M) à intervalle de temps régulier sur une durée de plus de 8h, ce qui représente plus de 30 expériences EIS successives.

A l'issue de ces 8h, l'électrode B140408(2) conserve 83% de sa réactivité mesurée après activation tandis que l'électrode B140408(7) en conserve 70% (figure 13).

### V. Electrode B180707.

L'électrode B180707 est constituée d'un dépôt de diamant fortement dopé sur un substrat de silicium.

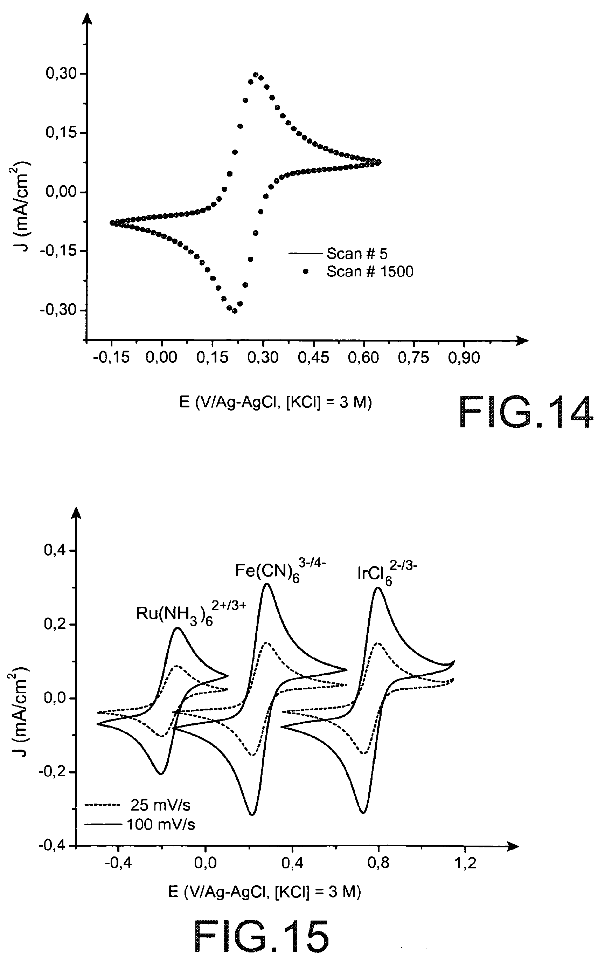

Les courbes de voltamétrie cyclique de cette électrode, réalisées dans une solution aqueuse de [Fe (CN)₆]^{3-/4-} (10⁻³ M) comprenant un sel de fond en macroconcentration ([KCl] = 0.5 M), avant et à l'issue de 1500 cycles redox entre -0.15 mV et 0.65 mV vs Ag/AgCl à la vitesse de 75 mV/s sont représentées figure 14.

Les deux figures se confondent attestant ainsi de la parfaite stabilité de la réponse électrochimique de l'électrode évaluée par voltamétrie cyclique sur une durée de plus de 15h.

La différence de potentiel entre pic anodique et cathodique (ΔEₚ = 64mV) témoigne de plus de la très bonne réactivité de cette électrode.

### VI. Electrodes B310807(X).

Les électrodes B310807(X) sont issues d'un lot d'échantillons de diamants identiques (lot B310807). Ces électrodes sont constituées de diamant fortement dopé déposé sur du silicium.

Elles sont testées après une activation au sein d'une solution aqueuse de perchlorate de lithium. Cette activation consiste à réaliser vingt cycles redox dans une solution aqueuse contenant un sel non électroactif, le perchlorate de lithium ([LiCl0₄]= 0.5 M) entre les frontières de décomposition du solvant, ajustées de façon à ce que les densités de courants anodique et cathodique n'excèdent jamais 150 µA/cm² afin de ne pas dégrader l'électrode et à la vitesse de balayage de 100mV/s.

Un des intérêts du diamant est la très large fenêtre de potentiels électrochimiques accessibles grâce à ce matériau. Nous avons donc souhaité explorer une partie de cette fenêtre en testant nos électrodes avec des couples redox ([couple redox]=10⁻³ M) choisis pour leur potentiel électrochimique standard : [Rᵤ (NH₃)₆]^{2+/3+}, [Fe (CN)₆]^{3-/4-} (E° = 0.3610 V) et [IrCl₆]^{2-/3-} (E° = 0.867V). La figure 15 représente les voltamogrammes ainsi obtenus.

Les électrodes activées présentent une très bonne réactivité pour chacun des trois couples redox (Δ*Ep* [Ru(NH₃)₆]^{2+/3+}= 67 mV, Δ*Ep* [Fe(CN)₆]^{3-/4-} = 64 mV, Δ*Ep* [IrCl₆]^{2-/3-} = 64 mV, scan rate 25mV/s) confirmant ainsi que les électrodes diamant activées peuvent être utilisées sur une large plage de potentiels avec des vitesses de transfert de charges intéressantes pour des applications en électrochimie.

### Bibliographie

D. Becker, K. Jüttner, Electrochimica Acta, (2003), 49, pp 29-39
D. Becker, K. Jüttner, Journal of Applied Electrochemistry, (2007), 37, pp 27-32
S. Ferro, A. De Battisti., Physical Chemistry Chemical Physics, (2002), 4, pp 1915-1920
H. Girard, N. Simon, D. Ballutaud, M. Herlem, A. Etcheberry., Diamond and Related Materia/s, (2007), 16, pp 316-325
C. H. Goeting, F. Marken, A. Gutierrez-Sosa, R. G. Compton and J. S. Foord., Diamond and Related Materia/s, (2000), 9, pp 390-396
M. C. Granger, G. M. Swain, The Electrochemical Society, (1999), 146, pp 4551-4558
M. Hupert, A. Muck, J. Wang, J. Stotter, Z. Cvackova, S. Haymond, Y. Show and G. M. Swain., Diamond and Related Materia/s, (2003) 12, pp 1940-1949
E . Mahé, D. Devilliers,Ch. Comminellis Electrochemica Acta, (2005) 50, pp 2263-2277
D. A. Tryk, K. Tsunozaki, T. N. Rao and A. Fujishima., Diamond and related material (2001) 10, pp 1804-1809
I. Yagi, H. Notsu, T. Kondo, D.A. Tryk and A. Fujishima., Journal of Electroanalytical Chemistry, (1999), 473, pp 173-178

## Revendications

1. Procédé d'activation d'une électrode à base de diamant comprenant une étape consistant à soumettre, en présence d'une solution aqueuse contenant un électrolyte ionique, ladite électrode à un potentiel alternativement de polarisation cathodique et anodique, d'amplitude croissante jusqu'à obtenir une densité de courant anodique et cathodique comprise entre 10 µA/cm² et 1 mA/cm².

2. Procédé d'activation selon la revendication 1, **caractérisé en ce que** ladite électrode à base de diamant est uniquement constituée de diamant mono, macro, micro, nano-cristallin ou ultra nanocristallin (UNCD).

3. Procédé d'activation selon la revendication 1, **caractérisé en ce que** le diamant ne constitue qu'une partie de ladite électrode à base de diamant mono, macro, micro, nano-cristallin ou ultra nanocristallin (UNCD).

4. Procédé d'activation selon l'une quelconque des revendications précédentes, **caractérisé en ce que** ladite électrode à base de diamant comprend du diamant dopé par un agent dopant.

5. Procédé d'activation selon la revendication 4, **caractérisé en ce que** ledit agent dopant est choisi dans le groupe constitué par le bore, l'azote, le phosphore, le nickel, le soufre et les mélanges de ceux-ci.

6. Procédé d'activation selon l'une quelconque des revendications précédentes, **caractérisé en ce que** ledit électrolyte ionique est un électrolyte ionique non-électroactif.

7. Procédé d'activation selon la revendication 6, **caractérisé en ce que** ledit électrolyte ionique non-électroactif est un sel non-électroactif de préférence choisi dans le groupe constitué par du LiClO₄, NaClO₄, KClO₄, Na₂SO₄, K₂SO₄, Li₂SO₄.

8. Procédé d'activation selon l'une quelconque des revendications précédentes, **caractérisé en ce que** ladite solution aqueuse contenant un électrolyte ionique est préalablement désaérée.

9. Procédé d'activation selon l'une quelconque des revendications précédentes, **caractérisé en ce que** le premier potentiel auquel l'électrode à base de diamant est soumise est un potentiel de polarisation cathodique.

10. Procédé d'activation selon l'une quelconque des revendications précédentes, **caractérisé en ce que** l'amplitude croissante du potentiel auquel l'électrode à base de diamant est soumise dans le cadre du procédé selon l'invention est obtenu au moyen d'incréments de potentiel.

11. Procédé d'activation selon l'une quelconque des revendications précédentes, **caractérisé en ce que** ledit procédé comprend une étape ultérieure consistant, lorsque la valeur de la densité de courant anodique et cathodique recherchée est obtenue, à soumettre ladite électrode à au moins 1 cycle de potentiel alternativement de polarisation cathodique et anodique d'amplitude constante.

12. Procédé d'activation selon l'une quelconque des revendications précédentes, **caractérisé en ce que** le dernier potentiel auquel ladite électrode est soumise est un potentiel de polarisation anodique qui s'achève au potentiel d'équilibre (OCP).

13. Procédé d'activation selon l'une quelconque des revendications précédentes, **caractérisé en ce que** l'alternance entre polarisation cathodique et anodique pour chaque potentiel est réalisée à une vitesse comprise entre 50 et 150 mV/s.

14. Procédé d'activation selon l'une quelconque des revendications précédentes, **caractérisé en ce qu'**il est mis en oeuvre en utilisant un montage dit à trois électrodes avec une électrode de référence, une électrode de travail qui correspond à ladite électrode à base de diamant et une contre électrode.

15. Utilisation d'un procédé d'activation selon l'une quelconque des revendications précédentes pour restaurer la réactivité électrochimique une électrode à base de diamant telle que définie à l'une quelconque des revendications 2 à 5.

## Claims

1. Process for activating a diamond-based electrode, which includes a step consisting in subjecting, in the presence of an aqueous solution containing an ionic electrolyte, said electrode to an alternately cathodic and anodic polarization potential, of increasing amplitude so as to obtain an anodic and cathodic current density of between 10 µA/cm² and 1 mA/cm².

2. Process for activation according to Claim 1, **characterized in that** said diamond-based electrode consists only of monocrystalline diamond, macrocrystalline diamond, microcrystalline diamond, nanocrystalline diamond or ultrananocrystalline diamond (UNCD).

3. Process for activation according to Claim 1, **characterized in that** the diamond constitutes only a portion of said monocrystalline diamond-, macrocrystalline diamond-, microcrystalline diamond-, nanocrystalline diamond- or ultrananocrystalline diamond (UNCD)-based electrode.

4. Process for activation according to any one of the preceding claims, **characterized in that** said diamond-based electrode comprises diamond doped by a dopant.

5. Process for activation according to Claim 4, **characterized in that** said dopant is chosen from the group consisting of boron, nitrogen, phosphorus, nickel, sulphur and mixtures thereof.

6. Process for activation according to any one of the preceding claims, **characterized in that** said ionic electrolyte is a non-electroactive ionic electrolyte.

7. Process for activation according to Claim 6, **characterized in that** said non-electroactive ionic electrolyte is a non-electroactive salt preferably chosen from the group consisting of LiClO₄, NaClO₄, KClO₄, Na₂SO₄, K₂SO₄, Li₂SO₄.

8. Process for activation according to any one of the preceding claims, **characterized in that** said aqueous solution containing an ionic electrolyte is deaerated beforehand.

9. Process for activation according to any one of the preceding claims, **characterized in that** the first potential to which the diamond-based electrode is subjected is a cathodic polarization potential.

10. Process for activation according to any one of the preceding claims, **characterized in that** the increasing amplitude of the potential to which the diamond-based electrode is subjected within the framework of the method according to the invention is obtained by means of potential increments.

11. Process for activation according to any one of the preceding claims, **characterized in that** said method includes a subsequent step consisting, when the desired anodic and cathodic current density is reached, in subjecting said electrode to at least one alternately cathodic and anodic polarization potential cycle of constant amplitude.

12. Process for activation according to any one of the preceding claims, **characterized in that** the final potential to which said electrode is subjected is an anodic polarization potential which reaches the equilibrium potential (OCP).

13. Process for activation according to any one of the preceding claims, **characterized in that** the alternation between cathodic polarization and anodic polarization for each potential is carried out at a rate of between 50 and 150 mV/s.

14. Process for activation according to any one of the preceding claims, **characterized in that** it is implemented using what is called a three-electrode arrangement, with a reference electrode, a working electrode, which corresponds to said diamond-based electrode, and a counterelectrode.

15. Use of a process for activation according to any one of the preceding claims for restoring the electrochemical reactivity of a diamond-based electrode as defined in any one of Claims 2 to 5.

## Patentansprüche

1. Verfahren zur Aktivierung einer auf Diamant basierenden Elektrode, das einen darin bestehenden Schritt umfasst, an die genannte Elektrode in Präsenz einer einen ionischen Elektrolyten enthaltenden wässrigen Lösung ein wechselweise katodisches und anodisches Polarisationspotential mit wachsender Amplitude anzulegen, bis zum Erreichen einer zwischen 10 µA/cm² und 1 mA/cm² enthaltenen Anoden- und Katodenstromdichte.

2. Aktivierungsverfahren nach Anspruch 1, **dadurch gekennzeichnet, dass** die genannte Elektrode auf Diamantbasis einzig durch einen Mono-, Makro-, Mikro-, Nanokristall- oder Ultrananokristall-Diamanten (UNCD) gebildet wird.

3. Aktivierungsverfahren nach Anspruch 1, **dadurch gekennzeichnet, dass** der Diamant nur einen Teil der genannten Elektrode auf Basis eines Mono-, Makro-, Mikro-, Nanokristall- oder Ultrananokristall-Diamanten (UNCD) bildet.

4. Aktivierungsverfahren nach einem der vorhergehenden Ansprüche, **dadurch gekennzeichnet, dass** die genannte Elektrode auf Diamantbasis einen mit einem Dotierstoff dotierten Diamanten umfasst.

5. Aktivierungsverfahren nach Anspruch 4, **dadurch gekennzeichnet, dass** der genannte Dotierstoff ausgewählt wird aus der Gruppe, die gebildet wird durch Bor, Stickstoff, Phosphor, Nickel, Schwefel und den Mischungen aus diesen.

6. Aktivierungsverfahren nach einem der vorhergehenden Ansprüche, **dadurch gekennzeichnet, dass** der genannte ionische Elektrolyt ein nicht-elektroaktiver Elektrolyt ist.

7. Aktivierungsverfahren nach Anspruch 6, **dadurch gekennzeichnet, dass** der nicht-elektroaktive ionische Elektrolyt ein nicht-elektroaktives Salz ist, vorzugsweise ausgewählt aus der durch LiClO₄, NaClO₄, KClO₄, Na₂SO₄, K₂SO₄, Li₂SO₄ gebildeten Gruppe.

8. Aktivierungsverfahren nach einem der vorhergehenden Ansprüche, **dadurch gekennzeichnet, dass** die genannte einen ionischen Elektrolyten enthaltende wässrige Lösung vorher entlüftet bzw. entgast wird.

9. Aktivierungsverfahren nach einem der vorhergehenden Ansprüche, **dadurch gekennzeichnet, dass** das erste Potential, das an die Elektrode auf Diamantbasis gelegt wird, ein katodisches Polarisationspotential ist.

10. Aktivierungsverfahren nach einem der vorhergehenden Ansprüche, **dadurch gekennzeichnet, dass** man die wachsende Amplitude des Potentials, das im Rahmen des erfindungsgemäßen Verfahrens an die Elektrode auf Diamantbasis gelegt wird, mittels Potentialinkrementen realisiert.

11. Aktivierungsverfahren nach einem der vorhergehenden Ansprüche, **dadurch gekennzeichnet, dass** das genannte Verfahren, wenn der Wert der angestrebten Anoden- und Katodenstromdichte erreicht ist, einen weiteren Schritt enthält, darin bestehend, an die genannte Elektrode wenigstens ein abwechselnd katodisches und anodisches Polarisationspotential mit konstanter Amplitude anzulegen.

12. Aktivierungsverfahren nach einem der vorhergehenden Ansprüche, **dadurch gekennzeichnet, dass** das letzte an die genannte Elektrode gelegte Potential ein anodisches Polarisationspotential ist, das im Gleichgewichtspotential (OCP) endet.

13. Aktivierungsverfahren nach einem der vorhergehenden Ansprüche, **dadurch gekennzeichnet, dass** der Wechsel zwischen katodischer und anodischer Polarisation für jedes Potential mit einer zwischen 50 und 150 mV/s enthaltenen Geschwindigkeit realisiert wird.

14. Aktivierungsverfahren nach einem der vorhergehenden Ansprüche, **dadurch gekennzeichnet, dass** es angewendet wird mit einer so genannten Dreielektrodenschaltung, die eine Referenzelektrode, eine der genannten Elektrode auf Diamantbasis entsprechende Arbeitselektrode und eine Gegenelektrode umfasst.

15. Anwendung eines Aktivierungsverfahrens nach einem der vorhergehenden Ansprüche zur Wiederherstellung der elektrochemischen Reaktivität einer Elektrode auf Diamantbasis wie definiert in einem der Ansprüche 2 bis 5.
